Europäisches Patentamt

European Patent Office

Office européen des brevets

(19)

(11) Veröffentlichungsnummer: **0 319 458 B1**

# (12) EUROPÄISCHE PATENTSCHRIFT

(45) Veröffentlichungstag der Patentschrift:
29.05.91 Patentblatt 91/22

(51) Int. Cl.⁵: **F17C 11/00, C01B 3/00**

(21) Anmeldenummer: **88730258.6**

(22) Anmeldetag: **28.11.88**

(54) **Druckbehälter für die Speicherung von Wasserstoff.**

(30) Priorität: **04.12.87 DE 3741625**

(43) Veröffentlichungstag der Anmeldung:
**07.06.89 Patentblatt 89/23**

(45) Bekanntmachung des Hinweises auf die
Patenterteilung:
**29.05.91 Patentblatt 91/22**

(84) Benannte Vertragsstaaten:
**DE ES FR GB IT NL SE**

(56) Entgegenhaltungen:
**GB-A- 2 148 477
US-A- 4 135 621
US-A- 4 457 136
PATENT ABSTRACTS OF JAPAN, Band 10, Nr.
142 (M-481)[2199], 24. Mai 1986**

(73) Patentinhaber: **HWT GESELLSCHAFT FÜR
HYDRID- UND WASSERSTOFFTECHNIK MBH
Wiesenstrasse 36
W-4330 Mülheim/Ruhr (DE)**

(72) Erfinder: **Halene, Clemens, Dipl.-Ing.
Pigageallee 23
W-4000 Düsseldorf 13 (DE)**

(74) Vertreter: **Meissner, Peter E., Dipl.-Ing. et al
Patentanwaltsbüro Meissner & Meissner,
Herbertstrasse 22
W-1000 Berlin 33 (DE)**

## Beschreibung

Die Erfindung betrifft einen Druckbehälter für die Speicherung von Wasserstoff in Form von Metallhydrid gemäß dem Oberbegriff des Patentanspruchs 1.

Ein derartiger Druckbehälter ist z.B. aus der DE-OS 35 02 311 bekannt. Die äußere Oberfläche des Druckbehälters ist im wesentlichen die eines Kreiszylindermantels, dessen Stirnseiten von in der Regel nach außen gewölbten (z.B. halbkugelförmigen) Stirnkappen verschlossen sind. Im Inneren des Druckbehälters ist eine hydridbildende Metallegierung eingebracht, die zur Einspeicherung von Wasserstoffgas dient. Während der Speicherbeladung wird infolge der Hydridbildung Wärme (Bildungsenthalpie) frei, die nach außen abgeführt werden muß, um bei dem vorgegebenen Beladedruck eine möglichst weitgehende Speicheraufladung zu erzielen. Umgekehrt ist es zur möglichst weitgehenden Speicherentladung nötig, dem Metallhydrid von außen Wärme zuzuführen.

Um eine hohe Nutzung des Speichers zu erreichen, ist es erwünscht, daß die Beladung und Entladung in möglichst kurzer Zeit, d.h. mit hoher Gasdurchsatzleistung erfolgen. Maßgebend hierfür ist, wie schnell der Wärmetausch zwischen dem Hydridmaterial und dem Heiz- oder Kühlmedium, das mit dem Außenmantel des Druckbehälters in Kontakt gebracht wird, gestaltet werden kann. Zur Verbesserung des Wärmeflusses ist es bekannt die äußere Oberfläche durch Rippen zu vergrößern, um den Wärmeübergang vom Wärmeträgermedium in die Behälterwand zu beschleunigen.

Weiterhin ist es bekannt, einen Hydridspeicher in Form parallel zusammengekoppelter länglicher Einzelbehälter mit kleinem Durchmesser (z.B. 30 mm) zu bauen. Ein derartiges Bündel von Einzelbehältern wird dann in ein gemeinsames Gehäuse eingebracht.

Das Wärmeträgermedium wird in dieses Gehäuse geleitet und fließt in den Zwischenräumen zwischen den Einzelbehältern, die eine glatte Oberfläche aufweisen. Diese Bauweise hat den Vorteil, daß durch die Aufteilung in kleine Einzelspeicher nicht nur eine erhebliche Vergrößerung der für den Wärmetausch zur Verfügung stehenden Außenoberfläche, sondern auch eine Verkürzung der Wärmeflußwege im Speicherinneren erfolgt. Nachteilig ist jedoch der hohe Fertigungs- und Montageaufwand.

Zur Erhöhung der Speichernutzung ist es vielfach erwünscht, den Be- und Entladedruck eines Hydridspeichers möglichst hoch anzusetzen. Dies bedingt eine entsprechende Festigkeitsauslegung der Druckbehälterwandung. Als Material für die Behälterwand wird daher üblicherweise, um auch einen guten Schutz vor Korrosion und vor Angriff durch den Wasserstoff selbst zu gewährleisten, Edelstahl verwendet. Edelstahl ist jedoch ein vergleichsweise schlechter Wärmeleiter und behindert die Zielsetzung eines schnellen Wärmetauschs.

Aus der JP 59-146 902 A ist es bekannt, einen doppelmanteligen Hydridspeicher zu verwenden, bei dem der innere Behälter aus Kupfer oder Aluminium, also aus einem guten Wärmeleiter hergestellt ist. Von dem Innenbehälter aus erstrecken sich mehrere parallel zur Behälterlängsachse angeordnete Rippen bis zum äußeren Behältermantel und bilden so innerhalb des hohlen Teils des Behälterdoppelmantels einzelne Kanäle, die die Durchleitung eines Wärmeübertragungsmediums gestatten. Durch die Rippen wird zwar die Oberfläche für den Wärmeaustausch zwischen Behälterinnenmantel und Wärmeträgermedium vergrößert. Die bekannte Konstruktion erfordert jedoch eine ungeschwächte Wand des Behälterinnenmantels und somit eine beträchtliche Wanddicke, um auch größeren Wasserstoffdrücken standzuhalten, so daß der Wärmefluß zum Hydridmantel entsprechend behindert wird. Umgekehrt läßt sie bei dünnen Wanddicken, die zwar einen sehr schnellen Wärmetausch gestatten, nur geringe Betriebsdrücke zu.

Aufgabe der Erfindung ist es daher, einen Druckbehälter der gattungsgemäßen Art so auszubilden, daß er ein hohes spezifisches Fassungsvermögen für Wasserstoff bei geringem Gesamtgewicht aufweist, eine schnellere Be- und Entladung zuläßt und bei hoher Betriebssicherheit und Lebensdauer auch mit hohen Gasdrücken betrieben werden kann. Der Herstellungsaufwand soll möglichst gering sein.

Gelöst wird diese Aufgabe durch einen Druckbehälter mit den Merkmalen des Patentanspruchs 1. Vorteilhafte Weiterbildungen der Erfindung sind in den Unteransprüchen 2-12 angegeben.

Die erfindungsgemäße Bauweise sieht zumindest im Bereich des zylindrischen Teils des Druckbehälters eine doppelwandige Ausführung der Behälterwand vor, wobei der Zwischenraum von Strömungskanälen für das Wärmeträgermedium durchzogen ist.

Wesentlich dabei ist, daß die zwischen den Strömungskanälen verlaufenden Stege, die vorzugsweise im Steggrund einen gerundeten Übergang zur inneren Behälterwand aufweisen, eine Abstützung der inneren Behälterwand auf die äußere Behälterwand gewährleisten, ohne sich dabei plastisch zu verformen. Dadurch ist es möglich, die Wanddicke des Innenbehälters entschieden dünner auszulegen, als an sich aufgrund einer Festigkeitsberechnung im Falle einer Lastaufnahme allein durch den Innenbehälter bei dem vorgesehenen Betriebsdruck erforderlich wäre. Die Verringerung der Wanddicke verbessert aber den Wärmeübergang von dem über die Strömungskanäle unmittelbar auf der Außenoberfläche der Innenwand geführten Wärmeträgermedium in das Innere des Druckbehälters. Von ganz besonderem Vorteil ist es, daß trotz hoher Betriebsdrücke für die Behälterinnenwand Materialien einsetzbar sind, die gegenüber Edelstahl schlechtere Festigkeitseigenschaften, aber eine sehr viel bessere Wärmeleitfähigkeit aufweisen (z.B. Aluminium, Kupfer oder entsprechende Legierungen).

So ist beispielsweise die Wärmeleitfähigkeit bestimmter Aluminiumlegierungen um mehr als eine Zehnerpotenz höher als die von Edelstählen. Für die äußere Behälterwand kann ohne weiteres Edelstahl insbesondere wegen seiner höheren Festigkeit eingesetzt werden, da die äußere Behälterwand keinen Einfluß auf den Wärmeübergang ins Behälterinnere hat.

Da bei einem mit Innendruck belasteten Behälter die Spannungen in Umfangsrichtung stets doppelt so groß sind wie die Spannungen in axialer Richtung, reicht es vielfach völlig aus, wenn die Doppelwandigkeit des Druckbehälters auf seinen kreiszylindrischen Mantelteil beschränkt wird, zumal die Stirnkappen ohnehin mit verstärkter Wanddicke ausgeführt werden können. Dies ist ohne weiteres zulässig, weil der Wärmeübergang in diesem Bereich nicht so wesentlich ist. Hinzukommt, daß ein Teil der Axialspannungen auch von den Stegen zwischen den Strömungskanälen aufgenommen werden kann, daß also diese Spannungen keineswegs nur von den dünnen Bereichen der Behälterinnenwand abzutragen sind.

Die Erfindung ermöglicht nicht nur durch die Verwendung von z.B. Aluminiumwerkstoffen und durch die Zulässigkeit dünner Innenwände einen erheblich verbesserten Wärmeübergang zwischen Hydridmaterial und Wärmeträgermedium. Sie führt auch zu leichteren Speichern, da insbesondere das Volumen des Wärmeträgermediums infolge der Führung durch die Strömungskanäle deutlich reduziert werden kann.

Anhand der nachfolgenden Figuren wird die Erfindung näher erläutert. Es zeigen :

Figur 1 einen Längsschnitt durch einen erfindungsgemäßen Druckbehälter,

Figur 2 einen Axialschnitt durch den Druckbehälter in Figur 1,

Figur 3 einen Längsschnitt durch einen Druckbehälter in nur teilweise doppelwandiger Ausführung,

Figur 4 einen Gasnippel,

Figur 5 eine Anordnung mehrerer Druckbehälter in einem gemeinsamen Gehäuse.

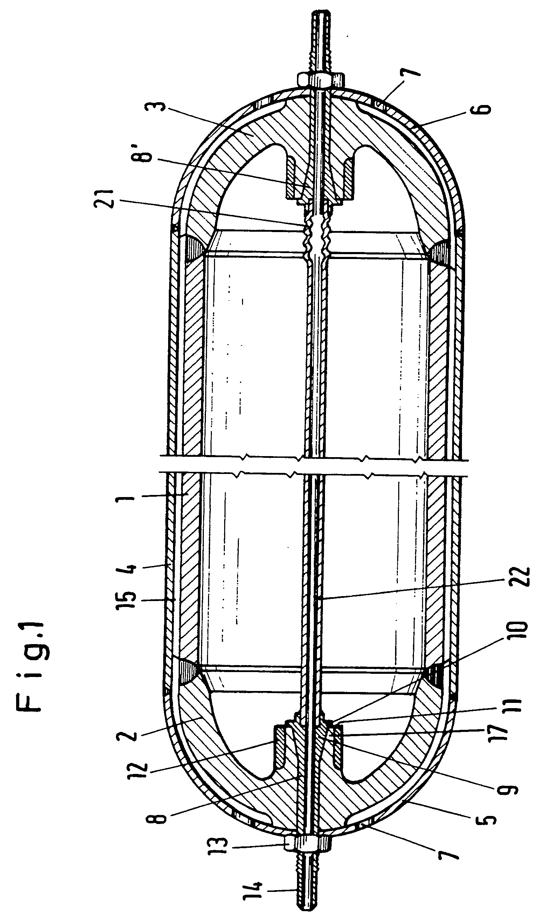

Der in Figur 1 längsgeschnittene Druckbehälter ist insgesamt doppelwandig ausgeführt und weist einen in Längsrichtung außen berippten Rohrkörper 1 und zwei halbkugelförmig ausgebildete Stirnkappen 2 und 3 auf, die zusamme den inneren Behälter bilden, in den das nicht dargestellte Hydridmaterial eingebracht wird. Der Wasserstoff wird durch einen vorzugsweise aus Edelstahl gefertigten Gasnippel 8, an dessen äußerem Ende 14 eine Gasleitung anschließbar ist, in den Hydridspeicher eingebracht und gegebenenfalls daraus wieder abgeführt. Die Gasableitung kann aber auch, wie dies in Figur 1 vorgesehen ist, über einen gesonderten Gasnippel 8' an gegenüberliegenden Behälterende erfolgen.

Im Inneren des Druckbehälters schließt der Gasnippel 8 an ein Gasfilterrohr 22 an, das auch mit dem Gasnippel 8' verbunden ist, wobei zum Ausgleich unterschiedlicher thermischer Längendehnungen von Druckbehälter und Filterrohr ein Kompensator 21 vorgesehen ist. Der innere Behälter ist vollständig von einem Außenbehälter eingeschlossen, der aus dem innen und außen glatten Rohrkörper 4 und den beiden Stirnkappen 5 und 6 gebildet wird.

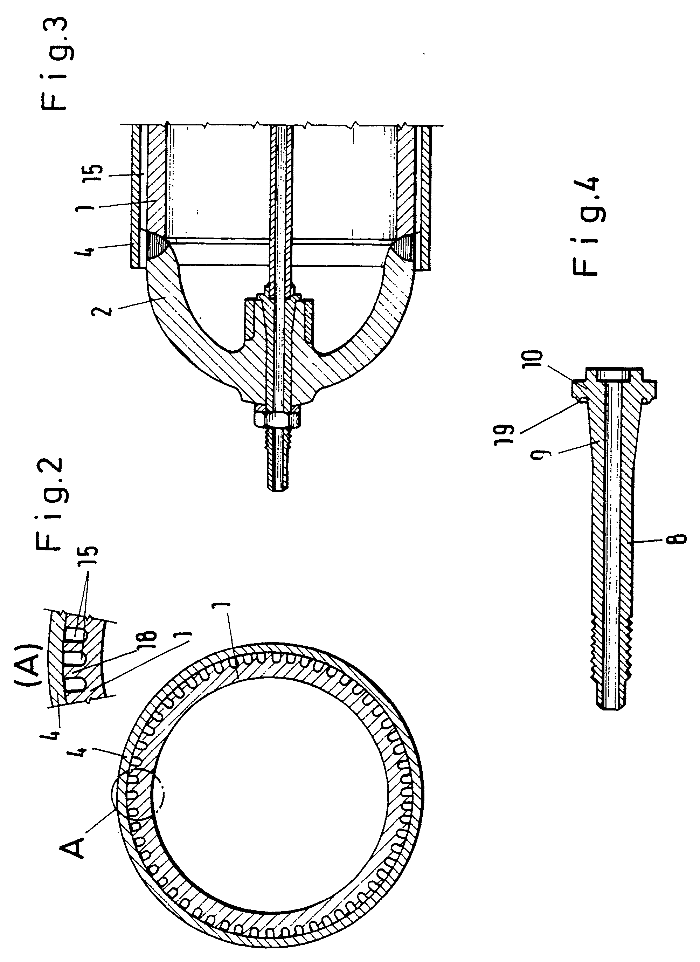

Wie aus dem in Figur 2 dargestellten Axialschnitt hervorgeht, liegt die Außenwand 4 dicht auf den Stegen 18 des inneren Rohrkörpers 1 auf, so daß auf diese Weise zwischen den Stegen 18 Strömungskanäle 15 gebildet werden. Letztere sind im Querschnitt im Bereich der inneren Behälterwand 1 etwa gewölbeförmig ausgebildet, d. h. die Stege 18 gehen mit Rundungen in die Behälterwand 1 über. Die Strömungskanäle 15 enden jeweils in dem zwischen den inneren Stirnkappen 2, 3 und den äußeren Stirnkappen 5, 6 gebildeten Hohlräumen, die durch Öffnungen 7 in den äußeren Stirnkappen 5, 6 nach außen offen sind. In der abgewandelten Ausführung gemäß Figur 3 sind die Strömungskanäle 15 unmittelbar nach außen offen, da den Stirnkappen 2, 3 keine äußeren Stirnkappen zugeordnet sind.

Der als äußere Behälterwand fungierende Rohrkörper 4 bewirkt aufgrund seines dichten Anliegens an die Stege, daß insbesondere die Umfangsspannungen infolge eines Behälterinnendrucks auf die äußere Behälterwand 4 übertragen und überwiegend dort gehalten werden. Die Behälterinnenwand 1 kann daher ohne Einbuße an Sicherheit festigkeitsmäßig entsprechend schwach ausgelegt werden, so daß dünne Innenwände und/oder die Verwendung weniger fester Werkstoffe, die aber sehr viel bessere Wärmeleiteigenschaften haben, möglich sind. Insbesondere eignen sich Aluminium oder Aluminiumlegierungen.

Da der Gasnippel 8 nach außen geführt ist, muß er gegenüber der inneren Stirnkappe 2 sorgfältig abgedichtet werden. Dies wird erfindungsgemäß durch einen Dichtkonus 9 erreicht, der über die Mutter 13 von außen angezogen werden kann. Alternativ oder zusätzlich kann eine Abdichtung, wie insbesondere aus Figur 4 hervorgeht, auch durch einen Dichtwulst 19 erzielt werden, der ringförmig auf dem flanschartigen Dichtbund 10 gebildet ist, in den der Gasnippel nach innen ausläuft. Vorzugsweise ist der Dichtwulst 19 im Querschnitt keilförmig gestaltet. Der Dichtwulst 19 liegt auf einer planbearbeiteten Anlagefläche 11 in der Stirnkappe 2 auf und drückt sich beim Anziehen der Mutter 13 des Nippels 8 in die Auflagefläche 11 ein, insbesondere wenn die Stirnkappe 2 aus einem Aluminiumwerkstoff gefertigt ist.

Um bei Verwendung eines relativ weichen Werkstoffs für die Stirnkappe 2 durch die Konusdichtung keine unzulässige Verformung der aus Material- und Gewichtsersparnisgründen als Aushöhlung 17 gestalteten Nippeldurchführung zu bewirken, ist die Aushöhlung 17 durch einen Bandagering 12 aus einem höherfesten Material (z.B. Edelstahl) verstärkt.

Die Behälteraußenwand 4 und ggf. die äußeren Stirnkappen 5, 6 werden zweckmäßig aus Edelstahl gefertigt, da dadurch Korrosionsprobleme vermieden werden und die schlechte Wärmeleitung konstruktionsbedingt nicht relevant ist. In manchen Fällen bietet es sich an, die Behälterwand 4 aus einem Fasermaterial (z.B. Kohlefasern) zu bilden oder damit zu verstärken, weil dadurch bei geringem Gewicht hohe Zugfestigkeiten realisiert werden.

Zur Verbesserung des Wärmeübergangs vom Wärmeträgermedium zur Wandung 1 des Innenbehälters können die Strömungskanäle 15 auch schraubenlinienförmig um den zylindrischen Teil 1 des Druckbehälters herumführen. Dadurch wird die Kontaktfläche gegenüber einer rein axialen Ausrichtung der Strömungskanäle 15 deutlich vergrößert.

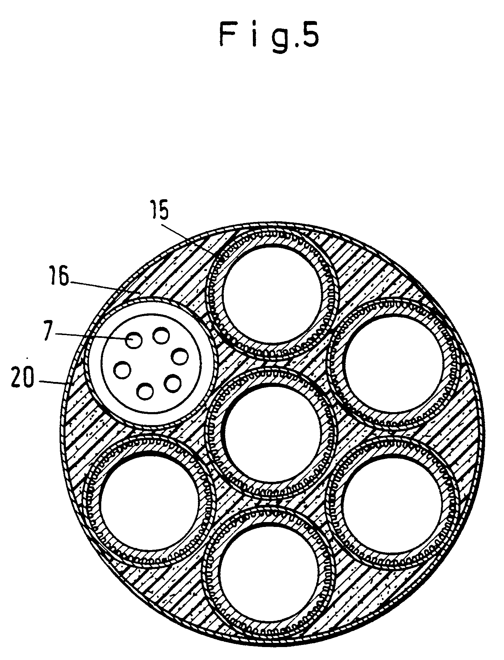

Figur 5 gibt im Axialschnitt eine schematische Darstellung eines aus sieben Einzeldruckbehältern gebildeten größeren Speichermoduls, das von einem rohrförmigen Gehäuse 20 eingeschlossen ist. Die Zwischenräume zwischen den Einzeldruckbehältern sind mit einem Füllmaterial 16 (z.B. Schaumstoff) mit geringer Wärmeleitfähigkeit und niedrigem Wärmeaufnahmevermögen ausgefüllt. Das zum Betrieb der Hydridspeicher benötigte Wärmeträgermedium (Heiz- und Kühlwasser) wird an einer Stirnfläche in das Gehäuse 20 eingeleitet und tritt entweder über die Öffnungen 7 in den Zwischenraum zwischen der inneren und der äußeren Stirnkappe der Einzeldruckbehälter und dann in die Strömungskanäle 15 ein oder wird im Falle des Fehlens der äußeren Stirnkappen unmittelbar in die Strömungskanäle 15 geführt.

Beide Varianten sind in der Figur 5 nebeneinander dargestellt. Da der Zwischenraum zwischen den Einzeldruckbehältern durch einen leichtgewichtigen Stoff ausgefüllt werden kann, werden vom Wärmeträgermedium nur die offengebliebenen Bereiche ausgefüllt. Es strömt daher nur durch die Zonen, die konstruktiv ausdrücklich dafür vorgesehen sind, nämlich durch die Strömungskanäle 15, und tritt an der gegenüberliegenden Seite in entsprechender Weise wieder aus. Somit wird das Volumen des Wärmeträgermediums im Hydridspeichermodul insgesamt reduziert und das Gewicht entsprechend vermindert. Besonders wesentlich ist, daß dadurch auch das Wärmeaufnahmevermögen des gesamten Speichers vermindert und somit ein noch schnelleres Umschalten zwischen Beladen und Entladen ermöglicht wird.

Die Behälterkonstruktion mit form- und kraftschlüssig eingesetztem Gasnippel ermöglicht es auf einfache Weise, für den Gaseinlaß und den Gasauslaß je ein gesondertes Ventil vorzusehen, wie es in Figur 1 dargestellt ist. Diese Ausführung erweist sich insbesondere bei Gasreinigungsanlagen, die bisher nur mit einem gemeinsamen Gasein- und Gasauslaß ausgerüstet wurden, als vorteilhaft.

## Ansprüche

1. Druckbehälter für die Speicherung von Wasserstoff in Form von Metallhydrid, mit einer kreiszylindrischen Mantelfläche und abschließenden Stirnkappen (2, 3), mit einer Füllung aus einem hydridbildenden Metall (Speichermasse), mit mindestens einem durch eine Stirnkappe (2) nach außen geführten Gasnippel (8) für die Zu- und Ableitung des Wasserstoffs, wobei der Druckbehälter im zylindrischen Teil seiner Mantelfläche doppelwandig ausgeführt ist und zwischen seiner inneren Behälterwand (1) und seiner äußeren Behälterwand (4) durch Stege (18) gegeneinander abgeschottete Strömungskanäle (15) angeordnet sind, durch die während der Hydrierung bzw. Dehydrierung der Speichermasse ein Wärmeträgermedium zum Kühlen oder Beheizen entlang der Behälterachse leitbar ist, und wobei der Gasnippel (8) gasdicht mit der Behälterinnenwand (1) verbunden ist, dadurch gekennzeichnet,
   – daß die innere Behälterwand (1) für eine geringere mechanische Belastung ausgelegt ist, als an sich aufgrund einer Festigkeitsrechnung im Falle einer Lastaufnahme allein durch den Innenbehälter erforderlich wäre,
   – daß die äußere Behälterwand (4) derart ausgelegt ist, daß die durch den Druck des Wasserstoffs bewirkten Umfangsspannungen überwiegend von der äußeren Behälterwand (4) getragen werden, und
   – daß die Stege (18) hinsichtlich Anzahl und Wanddicke derart dimensioniert sind, daß bei der Lastübertragung von der inneren Behälterwand (1) auf die äußere Behälterwand (4) keine plastische Verformung der Stege (18) eintritt.

2. Druckbehälter nach Anspruch 1, dadurch gekennzeichnet, daß die Stege (18) im Steggrund einen gerundeten Übergang zur inneren Behälterwand (1) aufweisen.

3. Druckbehälter nach Anspruch 1 oder 2, dadurch gekennzeichnet, daß der Druckbehälter auch im Bereich der Stirnkappen (2, 3) doppelwandig ausgeführt ist und in den Außenwänden (5, 6) der Stirnkappen (2, 3) Ein- bzw. Auslaßöffnungen (7) für das Wärmeträgermedium angeordnet sind.

4. Druckbehälter nach Anspruch 1 oder 2, dadurch gekennzeichnet, daß die Strömungskanäle (15) im Übergangsbereich zwischen den Stirnkappen (2, 3) und der zylindrischen Mantelfläche (1) nach außen offen sind für den Ein- und Austritt des Wärmeträgermediums.

5. Druckbehälter nach einem der Ansprüche 1-4, dadurch gekennzeichnet, daß die Strömungskanäle (15) zwischen den gegenüberliegenden Stirnkappen (2, 3) schraubenlinienförmig über die Behältermantelfläche (1) verlaufen.

6. Druckbehälter nach einem der Ansprüche 1-5, dadurch gekennzeichnet, daß die innere Behälterwand (1, 2, 3) aus einem Material mit hoher Wärmeleitfähigkeit, insbesondere aus Aluminium oder einer Aluminiumlegierung gefertigt ist.

7. Druckbehälter nach Anspruch 6, dadurch gekennzeichnet, daß die Stirnkappe (2) des Innenbehälters im Bereich der Durchführung des Gasnippels (8) eine Verdickung aufweist und die gasdichte Verbindung als Konusdichtung (9) ausgeführt ist.

8. Druckbehälter nach Anspruch 7, dadurch gekennzeichnet, daß die Stirnkappe (2) im Bereich der Durchführung des Gasnippels (8) eine ins Behälterinnere gerichtete Aushalsung (17) aufweist.

9. Druckbehälter nach Anspruch 8, dadurch gekennzeichnet, daß die Aushalsung (17) von einem Bandagering (12) aus einem höherfesten Material umgeben ist.

10. Druckbehälter nach einem der Ansprüche 1-9, dadurch gekennzeichnet, daß der Gasnippel (8) einen flanschartigen Dichtbund (10) aufweist, auf dessen der Stirnkappe (2) zugewandten Ringfläche ein ringförmiger Dichtwulst (19) angeordnet ist, dessen Profil im Querschnitt vorzugsweise keilförmig ausgebildet ist und der im montierten Zustand in eine planbearbeitete Anlagefläche (11) auf der Innenoberfläche der Stirnkappe (2) im Sinne einer Nut/Feder-Verbindung eingedrückt ist.

11. Druckbehälter nach einem der Ansprüche 1-10, dadurch gekennzeichnet, daß die äußere Behälterwand (4, 5, 6) aus Edelstahl gefertigt ist.

12. Druckbehälter nach einem der Ansprüche 1-11, dadurch gekennzeichnet, daß die äußere Behälterwand (4) aus einem Fasermaterial gebildet oder durch Umwickeln mit einem Fasermaterial verstärkt ist.

## Claims

1. A pressure vessel for storing hydrogen in the form of metal hydride, comprising a cylindrical casing surface and terminal end caps (2, 3), a filling of a hydride-forming metal (storage substance), at least one gas nipple (8) which passes out through one end cap (2) for supplying and removing the hydrogen, with the pressure vessel being double-walled in the cylindrical part of its casing surface and with flow channels (15) being located between its inner vessel wall (1) and its outer vessel wall (4), which channels are partitioned off from each other by crosspieces (18), through which channels a heat transfer medium can be passed along the vessel axis for cooling or heating during the hydrogenation or dehydrogenation of the storage substance, and with the gas nipple (8) being joined in gas-tight manner to the inner vessel wall (1), characterised in that

– the inner vessel wall (1) is designed for a lower mechanical load than would be necessary per se as a result of a calculation of strength in the case of a load being borne solely by the inner vessel,
– that the outer vessel wall (4) is designed so that the peripheral stresses caused by the pressure of the hydrogen are borne predominantly by the outer vessel wall (4), and
– that the crosspieces (18) are dimensioned with respect to number and wall thickness such that no plastic deformation of the crosspieces (18) occurs upon the transfer of load from the inner vessel wall (1) to the outer vessel wall (4).

2. A pressure vessel according to Claim 1, characterised in that the crosspieces (18) in the crosspiece base have a rounded transition to the inner vessel wall (1).

3. A pressure vessel according to Claim 1 or 2, characterised in that the pressure vessel is also double-walled in the region of the end caps (2, 3) and inlet or outlet openings (7) for the heat transfer medium are located in the outer walls (5, 6) of the end caps (2, 3).

4. A pressure vessel according to Claim 1 or 2, characterised in that the flow channels (15) in the region of transition between the end caps (2, 3) and the cylindrical casing surface (1) are open to the outside for the heat transfer medium to enter and leave.

5. A pressure vessel according to one of Claims 1 to 4, characterised in that the flow channels (15) between the opposing end caps (2, 3) run in a helix across the vessel casing surface (1).

6. A pressure vessel according to one of Claims 1 to 5, characterised in that the inner vessel wall (1, 2, 3) is made of a material with high thermal conductivity, in particular of aluminium or an aluminium alloy.

7. A pressure vessel according to Claim 6, characterised in that the end cap (2) of the inner vessel has a thickened section in the region through which the gas nipple (8) passes and the gas-tight connection is designed as a conical seal (9).

8. A pressure vessel according to Claim 7, characterised in that in the region through which the gas nipple (8) passes the end cap (2) has a neck (17) pointing into the interior of the vessel.

9. A pressure vessel according to Claim 8, characterised in that the neck (17) is surrounded by a binding ring (12) of a higher-strength material.

10. A pressure vessel according to one of Claims 1 to 9, characterised in that the gas nipple (8) has a flange-like sealing shoulder (10), on the annular surface of which close to the end cap (2) there is located an annular sealing bead (19), the profile of which in cross-section is preferably wedge-shaped and which in the assembled state is pressed into a faced contact surface (11) on the inner surface of the end cap (2) in the manner of a groove and tongue joint.

11. A pressure vessel according to one of Claims 1 to 10, characterised in that the outer vessel wall (4, 5, 6) is made of special steel.

12. A pressure vessel according to one of Claims 1 to 11, characterised in that the outer vessel wall (4) is formed of a fibrous material or is reinforced by winding round with a fibrous material.

## Revendications

1. Réservoir sous pression pour le stockage d'hydrogène sous forme d'hydrure métallique, comportant une surface d'enveloppe cylindrique circulaire et des coiffes frontales de fermeture (2,3), un chargement d'un métal formant de l'hydrure (masse de stockage), au moins un raccord de gaz (8), guidé vers l'extérieur à travers une coiffe frontale (2), pour l'admission et l'évacuation de l'hydrogène, le réservoir sous pression présentant une double paroi dans la partie cylindrique de sa surface d'enveloppe, et des canaux d'écoulement (15), cloisonnés l'un par rapport à l'autre par des traverses (18), étant agencés entre sa paroi interne (1) et sa paroi externe (4), canaux à travers lesquels, pendant l'hydrogénation ou la déshydrogénation de la masse de stockage, un fluide caloporteur pour refroidir ou chauffer peut être amené le long de l'axe du réservoir, et le raccord (8) étant relié de façon étanche aux gaz à la paroi interne (1) du réservoir, caractérisé en ce que :

– la paroi interne (1) du réservoir est conçue pour une charge mécanique plus faible que cela serait nécessaire en soi sur la base d'un calcul de résistance dans le cas d'une absorption de charge par le réservoir interne seul,

– la paroi externe (4) du réservoir est conçue de sorte que les tensions périphériques créées par la pression d'hydrogène sont supportées de façon prépondérante par la paroi externe (4) du réservoir, et

– les traverses (18), en ce qui concerne leur nombre et leur épaisseur, sont dimensionnées de sorte que, lors du transfert de charge de la paroi interne (1) du réservoir à sa paroi externe (4), il ne se produit aucune déformation plastique des traverses (18).

2. Réservoir selon la revendication 1, caractérisé en ce que la base des traverses (18) présente une transition arrondie vers la paroi interne (1) du réservoir.

3. Réservoir selon la revendication 1 ou 2, caractérisé en ce que le réservoir présente également une double paroi dans la zone des coiffes frontales (2, 3) et, dans les parois externes (5, 6) des coiffes frontales (2, 3), sont agencées des ouvertures d'admission et d'échappement (7) pour le fluide caloporteur.

4. Réservoir selon la revendication 1 ou 2, caractérisé en ce que les canaux d'écoulement (15), dans la zone de transition entre les coiffes frontales (2, 3) et la surface d'enveloppe cylindrique (1), sont ouverts vers l'extérieur pour l'admission et l'échappement du fluide caloporteur.

5. Réservoir selon une des revendications 1 à 4, caractérisé en ce que les canaux d'écoulement (15) entre les coiffes frontales opposées (2, 3) s'étendent hélicoïdalement sur la surface d'enveloppe (1) du réservoir.

6. Réservoir selon une des revendications 1 à 5, caractérisé en ce que la paroi interne (1, 2, 3) du réservoir est réalisée en un matériau à conductibilité thermique élevée, en particulier en aluminium ou en un alliage d'aluminium.

7. Réservoir selon la revendication 6, caractérisé en ce que la coiffe frontale (2) du réservoir interne présente, dans la zone du raccord (8), un épaississement, et la liaison étanche aux gaz est réalisée sous forme de joint étanche conique (9).

8. Réservoir selon la revendication 7, caractérisé en ce que la coiffe frontale (2) présente, dans la zone du raccord (8), un col (17) orienté vers l'intérieur du réservoir.

9. Réservoir selon la revendication 8, caractérisé en ce que le col (17) est entouré par une frette (12) en un matériau à haute résistance.

10. Réservoir selon une des revendications 1 à 9, caractérisé en ce que le raccord (8) présente un collet d'étanchéité (10), à la surface proche de la coiffe (2) duquel est prévu un renflement annulaire (19), dont le profil, en section transversale, est avantageusement en forme de coin, et qui, dans l'état monté, est pressé dans une surface d'appui (11) usinée à plat sur la surface interne de la coiffe (2), dans le sens d'une liaison à rainure et languette.

11. Réservoir selon une des revendications 1 à 10, caractérisé en ce que la paroi externe (4, 5, 6) du réservoir est réalisée en acier spécial.

12. Réservoir selon une des revendications 1 à 11, caractérisé en ce que la paroi externe (4) du réservoir est formée en une matière en fibres, ou est renforcée par un enroulement de matière en fibres.

# Fig.1

EP 0 319 458 B1

Fig.2

(A)

Fig.3

Fig.4

EP 0 319 458 B1

# F i g.5